# EUROPEAN PATENT APPLICATION

(11) **EP 3 843 060 A1**
(43) Date of publication of application: **30.06.2021**
(21) Application number: 19851319.4
(22) Date of filing: 14.03.2019
(51) Int. Cl.: G08B 25/04, G06F 21/32, G07C 9/00

(54) **RECEIVING TERMINAL DEVICE**

(30) Priority: 23.08.2018 JP 2018156492
(71) Applicant: NTT Ltd Japan Corporation, Tokyo 100-0004 (JP)
(72) Inventor: FUJII, Yasuo, Tokyo 100-0004 (JP); KUBOTA, Takehiko, Tokyo 100-0004 (JP); KAWASAKI, Masaji, Tokyo 100-0004 (JP)
(74) Representative: Vinsome, Rex Martin
(86) International application number: PCT/JP2019/010624
(87) International publication number: WO 2020/039630

(57) **Abstract**

A reception terminal that have an enhanced security level is provided.

A reception terminal, included in a management system for managing entry and/or exit of a user in a security zone that includes a server room of a data center, the reception terminal being connected to a reception device that issues reception information upon accepting an input of personal information of the user prior to the entry of the user into the security zone, includes: an input part that accepts an input of the reception information performed by the user prior to the entry of the user into the security zone; a personal authentication part that is used for a personal authentication of the user visiting the data center; and an issuing part that issues, in a case where biometric information is pre-registered in addition to a performance of a personal identification, authorization information representing an authorization of the entry of the user into a particular server room in response to existence of personal information associated with the reception information input to the input part, in conjunction with a satisfaction of a visit condition of visit information associated with the reception information input to the input part.

## Description

### TECHNICAL FIELD

The present invention relates to a reception terminal.

### BACKGROUND ART

Conventionally, there is a visitor management system that includes a visitor reception device, a security pass issuing device, and an entry gate device. The visitor reception device transmits a reception number corresponding to appointment information to a visitor's terminal. The security pass issuing device transmits the reception number to the visitor reception device when the reception number is input by the visitor. The visitor reception device transmits authentication information to the security pass issuing device. The security pass issuing device outputs the authentication information printed on a print medium. The entry gate device reads the authentication information when the visitor shows the print medium to the entry gate device, and transmits the authentication information to the visitor reception device. The visitor reception device determines whether or not an entry of the visitor is acceptable, generates control information based on the determination result, and transmits the control information to the entry gate device. The entry gate device operates a gate based on the control information (for example, see Patent Document 1).

### RELATED ART DOCUMENT

### [PATENT DOCUMENT]

[Patent Document 1] Japanese Laid-open Patent Publication No. 2008-171350

### SUMMARY OF THE INVENTION

### PROBLEM TO BE SOLVED BY THE INVENTION

However, in a case where the reception number, the authentication information or the like are obtained illegally by a third party, the conventional visitor management system has a risk that a person other than the visitor who is scheduled to visit the data center would enter the data center. Thus, further improvement of a security level of the conventional visitor management system is desired.

Accordingly, it is an aim to provide a reception terminal that have enhanced security level.

### MEANS FOR SOLVING THE PROBLEM

A reception terminal included in a management system for managing entry and/or exit of a user in a security zone that includes a server room of a data center, the reception terminal being connected to a reception device that issues reception information upon accepting an input of personal information of the user prior to the entry of the user into the security zone, the reception terminal including: an input part that accepts an input of the reception information performed by the user prior to the entry of the user into the security zone; a personal authentication part that is used for a personal authentication of the user visiting the data center; and an issuing part that issues, in a case where biometric information is pre-registered in addition to a performance of a personal identification, authorization information representing an authorization of the entry of the user into a particular server room in response to existence of personal information associated with the reception information input to the input part, in conjunction with a satisfaction of a visit condition of visit information associated with the reception information input to the input part.

### EFFECT OF THE PRESENT INVENTION

It is possible to provide a reception terminal that have enhanced security level.

### BRIEF DESCRIPTION OF THE DRAWINGS

FIG. 1 illustrates a schematic configuration of a data center 10;
FIG. 2 is a diagram illustrating a management system 500 according to the embodiment;
FIG. 3 illustrates an external view of a reception terminal 100;
FIG. 4A is a diagram illustrating an example of display contents of a display 102 of the reception terminal 100;
FIG. 4B is a diagram illustrating an example of display contents of the display 102 of the reception terminal 100;
FIG. 5 is a diagram illustrating a key locker 301 that stores the rack keys;
FIG. 6 is a diagram illustrating an example of a confirmation picture of input contents to a web entry system;
FIG. 7 is a diagram illustrating registration contents of a visitor-note;
FIG. 8A is a diagram illustrating an entry/exit record;
FIG. 8B is a diagram illustrating a rack open/close record;
FIG. 9 is a task transition diagram illustrating processes performed in the management system 500;
FIG. 10 is a task transition diagram illustrating processes performed in the management system 500; and
FIG. 11 is a task transition diagram illustrating processes performed in the management system 500.

### EMBODIMENTS FOR CARRYING OUT THE INVENTION

Hereinafter, embodiments to which a reception terminal are applied will be described.

### <Embodiment>

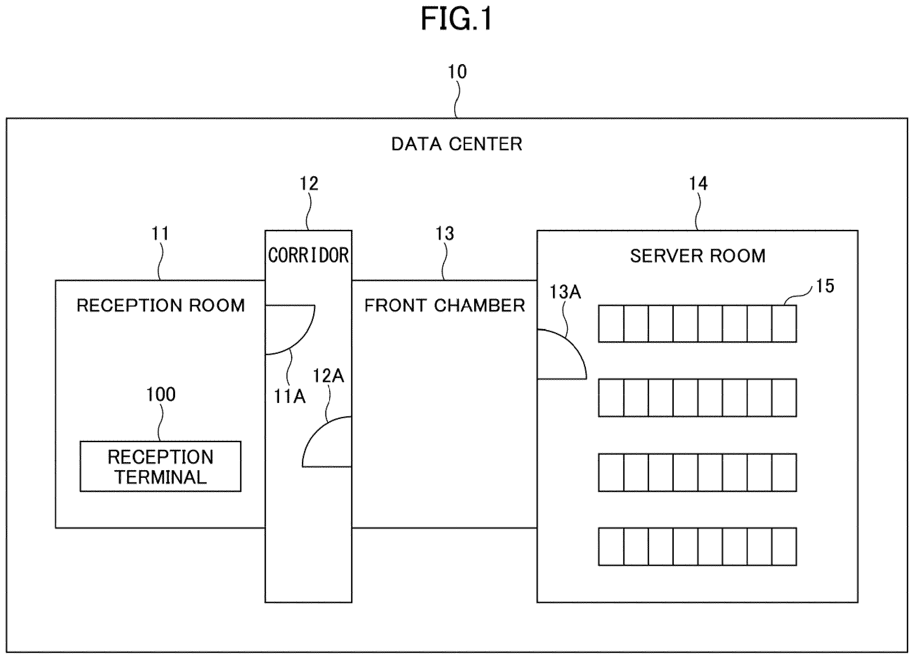

FIG. 1 illustrates a schematic configuration of a data center 10. The data center 10 includes a reception room 11, a corridor 12, a front chamber 13, and a server room 14. The reception room 11 is a space that serves as an entrance to the data center 10 when a user enters the data center 10. The reception room 11 is a space that allows the user's entry without requiring an authentication process that includes a verification using a serial number registered in an admission card and a verification using biometric information of the user. Details of the verifications will be described later.

A reception terminal 100 is disposed in the reception room 11. The user uses the reception terminal 100 to perform processes so as to enter the server room 14. The corridor 12 is a space connecting the reception room 11 and the front chamber 13. A gate 11A is provided between the reception room 11 and the corridor 12.

The reception room 11 is a space that serves as an exit when the user leaves the data center 10 after finishing operations in the server room 14. A door of the reception room 11 is automatically opened when the user enters the reception room from outside. When the user exits the reception room 11, it is necessary for the user to return the admission card to the reception terminal 100 to unlock a lock mechanism of the door of the reception room 11.

The front chamber 13 is a spare chamber provided to enhance a security level between the corridor 12 and the server room 14. A gate 12A is provided between the corridor 12 and the front chamber 13, and a gate 13A is provided between the front chamber 13 and the server room 14. The gates 11A to 13A cannot be opened because their lock mechanisms are locked without being unlocked.

Card readers for reading the admission card issued by the reception terminal 100 and readers for reading biometric information of the user are disposed in front of the gates 11A to 13A as viewed from outside. Each of the lock mechanisms of the gates 11A to 13A is unlocked in a case where the authentication process including the verification using the serial number registered in the admission card and the verification using the biometric information of the user is established.

Thus, an inner side of the gate 11A, i.e., the corridor 12, the front chamber 13, and the server room 14, is a security zone secured by the gates 11A to 13A. The security zone is secured by the authentication process that includes the verification using the serial number registered in the admission card and the verification using the biometric information of the user.

Since lock mechanisms of the gates 11A to 13A are not unlocked in a case where the authentication process is not established, the user is not able to enter the corridor 12, the front chamber 13, and the server room 14 in a case where the authentication process is not established.

A rack 15 for housing servers is disposed in the server room 14. The data center 10 includes a plurality of the front chambers 13 and a plurality of the server rooms 14. The front chambers 13 are disposed at entrances of the server rooms 14, respectively. Accordingly, in a case where the user enters any one of the server rooms 14, the user passes through the gate 12A between the corridor 12 and the corresponding front chamber 13, and passes through the gate 13A between the corresponding front chamber 13 and the server room 14. In the front chamber 13, the verifications, i.e., the verification using the serial number registered in the admission card and the verification using the biometric information, for opening the gate 13A can be performed after the gate 12A connected to the corridor 12 is closed.

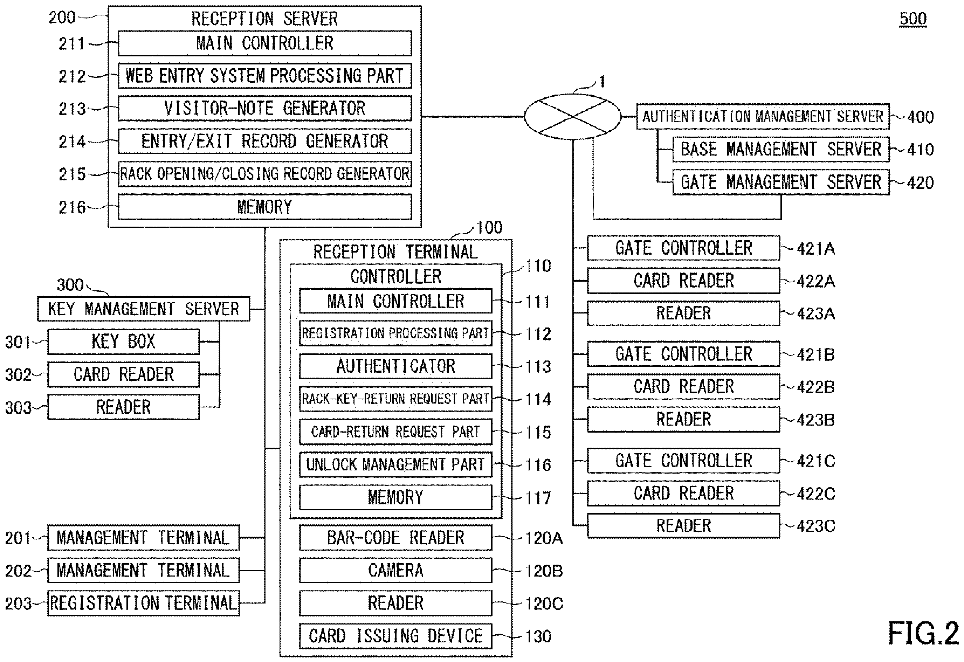

FIG. 2 is a diagram illustrating a management system 500 according to the embodiment. The management system 500 includes the reception terminal 100, a reception server 200, a management terminal 201, a management terminal 202, a registration terminal 203, a key management server 300, a key locker 301, a card reader 302, a reader 303, an authentication management server 400, a gate management server 410, a gate controller 421A, a card reader 422A, a reader 423A, a gate controller 421B, a card reader 422B, a reader 423B, a gate controller 421C, a card reader 422C, and a reader 423C.

The reception server 200 is connected to the authentication management server 400 via an internet 1. As an example, the reception server 200 is disposed at the data center 10 and is connected to the reception terminal 100, the management terminal 201, the management terminal 202, the registration terminal 203, and the key management server 300 via a local area network LAN or the like.

The key management server 300 is connected to the reception server 200 and the reception terminal 100 via the LAN or the like. The key locker 301, the card reader 302, and the reader 303 are connected to the key management server 300 via the LAN or the like.

The gate management server 410 is connected to the authentication management server 400 via the LAN or the like. The gate controller 421A, the card reader 422A, the reader 423A, the gate controller 421B, the card reader 422B, the reader 423B, the gate controller 421C, the card reader 422C, and the reader 423C are connected to the gate management server 410 via the LAN or the like.

The card reader 422A and the reader 423A are disposed outside of the gate 11A, the card reader 422B and the reader 423B are disposed outside of the gate 12A, and the card reader 422C and the reader 423C are disposed outside of the gate 13A. Each of the readers 423A, 423B, and 423C are examples of a second reader.

The gate controller 421A determines whether to unlock the gate 11A based on read contents of the card reader 422A and read contents of the reader 423A. Similarly, the gate controller 421B determines whether to unlock the gate 12A based on read contents of the card reader 422B and read contents of the reader 423B. The gate controller 421C determines whether to unlock the gate 13A based on read contents of the card reader 422C and read contents of the reader 423C.

The reception server 200 is realized by a computer including a central processing unit (CPU), a random access memory (RAM), a read only memory (ROM), a hard disk drive (HDD), an input/output interface, internal buses and the like.

The reception server 200 includes a main controller 211, a web entry system processing part 212, a visitor-note generator 213, an entry/exit record generator 214, a rack opening/closing record generator 215, and a memory 216. The main controller 211, the web entry system processing part 212, the visitor-note generator 213, the entry/exit record generator 214, and the rack opening/closing record generator 215 are functional blocks representing functions of the reception server 200, and the memory 216 represents a memory of the reception server 200 functionally.

The main controller 211 is a processor that executes processes other than processes performed by the web entry system processing part 212, the visitor-note generator 213, the entry/exit record generator 214, and the rack opening/closing record generator 215, and controls processes of the acceptance server 200.

The web entry system processing part 212 operates and manages a web entry system that pre-registers personal information and visit information, of the user who visits the data center 10. The personal information and the visit information are admission application information required when the user applies for the entry into the data center 10.

The user who visits the data center 10 accesses the reception server 200 via the internet 1 on his/her personal computer (PC) and the like at a workplace, and registers the personal information i.e., name, pronunciations of the name, workplace (name of company), contact (phone number, email address), and visit information (name of the data center, date and time, server room number, and rack number to visit) in a database of the web entry system.

When the web entry system processing part 212 accepts inputs of the personal information and the visit information to the web entry system, the web entry system processing part 212 issues an admission number. The admission number is associated with the personal information and the visit information registered in the web entry system and is used as a management number.

When the web entry system processing part 212 issues the admission number, the web entry system processing part 212 transmits a QR code (registered trademark) representing the admission number to the email address of the user. The admission number is an identification code of a predetermined number of digits (10 digits in this case), which combines an identification code of the workplace (7 digits as an example) with an identification code of the user (3 digits as an example).

The visitor-note generator 213 performs operation and management of a visitor-note that records data input to the web entry system. The data input to the web entry system is data representing the personal information and the visit information and is registered in the database, of the web entry system, stored in the memory 216. The visitor-note is a database that manages input information (the personal information and the visit information) to the web entry system for each identification code of the user. The user can check the input information afterward by registering data input to the web entry system in the visitor-note.

The entry/exit record generator 214 associates an opening/closing history of the gates 11A to 13A received from the authentication management server 400 via the internet 1 with date and time, and thereby generates an entry/exit record representing a record (history) of the entry and exit record (history) of the user to and from the corridor 12, the front chamber 13, and the server room 14. The generated entry/exit record is stored in the memory 216.

The rack opening/closing record generator 215 associates an opening/closing history of the rack 15 received from the key management server 300 with date and time, and thereby generates a rack opening/closing record representing a record (history) of opening and closing of the rack 15 performed by the user. The opening/closing history of the rack 15 represents an opening and closing history of a cover of the key locker 301 that stores a key (rack key) of the rack 15, i.e., a use history of the rack key. The generated rack opening/closing record is stored in the memory 216.

The memory 216 stores programs and data required by the reception server 200 that performs managing the web entry system, generating the visitor-note, generating the entry/exit record, generating the rack opening/closing record, and the like. The memory 216 stores the visitor-note, the entry/exit record, and the rack opening/closing record.

The reception terminal 100 includes a controller 110, a bar-code reader 120A, a camera 120B, a reader 120C, and a card issuing device 130. The controller 110 is connected to the reception server 200 and the key management server 300 via the LAN or the like outside the reception terminal 100, and is connected to the bar-code reader 120A, the camera 120B, the reader 120C, and the card issuing device 130 inside the reception terminal 100.

The controller 110 is realized by a computer including CPU, RAM, ROM, HDD, I/O interface, internal bus, and the like. The controller 110 includes a main controller 111, a registration processing part 112, an authenticator 113, a rack-key-return request part 114, a card-return request part 115, an unlock management part 116, and a memory 117.

The main controller 111 is a processing part that executes processes other than processes performed by the registration processing part 112, the rack-key-return request part 114, the card-return request part 115, and the unlock management part 116, and manages the processes of the controller 110.

The registration processing part 112 performs processes of registering the biometric information read by the reader 120C in a biometric database of the memory 216 of the reception server 200. The biometric information registered in the biometric database is associated with the admission number. Therefore, the biometric information registered in the biometric database is associated with the personal information and the visit information, registered in the database and the visitor-note of the web entry system, through the admission number.

When the QR code is read by the bar-code reader 120A, the authenticator 113 reads the personal information and the visit information associated with the admission number represented by the QR code in the web entry system, determines whether the personal information exists, whether a name of the data center included in the visit information corresponds to the data center 10, and whether the date and time included in the visit information includes date and time of the user's visit to the data center 10.

The existence of the personal information means that verification based on the admission number is established. The correspondence of the name of the data center included in the visit information with the data center 10 means that visit conditions represented by the visit information are satisfied, and the verification based on the visit conditions is established.

The date and time included in the visit information includes the date and a period of time. It is determined that the date and time included in the visit information includes the date and time of the user's visit, if the date of the visit information corresponds to the date of the user's visit, and if the time of the user's visit is included in the period of time included in the visit information.

The authenticator 113 determines whether the biometric information is registered as the personal information, in a case where the name of the data center included in the visit information corresponds to the data center 10, and where the date and time included in the visit information includes the date and time of the user's visit.

In a case where the biometric information is not registered, the authenticator 113 notifies the main controller 111 that the biometric information is not registered. As a result, the main controller 111 shifts a mode to a mode for registering the biometric information, displays a message, requesting selection of a finger for registering the biometric information, on the display 102, switches pictures displayed on the display 102 according to operation contents of the user to the display 102, and causes the reader 120C to read the biometric information. The main controller 111 causes the card issuing device 130 to issue an admission card upon completion of reading the biometric information.

In a case where the biometric information is registered, the authenticator 113 transmits establishment data representing that the verification has been established to the card issuing device 130, and causes the card issuing device 130 to issue the admission card. A case where the biometric information is already registered means that the number of times that the user visits the data center 10 is more than or equal to twice. Accordingly, the admission card is issued without registering the biometric information at a time of a second and subsequent visits. An admission, to the data center 10, that facilitates entry procedures is referred to as a smart entry.

The rack-key-return request part 114 displays messages, confirming return of the rack key, to the display of the reception terminal 100 when the user goes back to the reception room 11 from the server room 14 through the front chamber 13 and the corridor 12, and returns the admission card to the card issuing device 130.

When the user goes back to the reception room 11 from the server room 14 through the front chamber 13 and the corridor 12, and returns the admission card to the card issuing device 130, the card-return request part 115 displays a message, on the display of the reception terminal 100, representing that the exit door of the reception room 11 is not unlocked unless the admission card is returned.

The unlock management part 116 unlocks the exit door of the reception room 11, if the card-return request part 115 confirms that the admission card is returned.

The memory 117 stores programs and data used when the main controller 111, the registration processing part 112, the rack-key-return request part 114, the card-return request part 115, and the unlock management part 116 perform the processes, data generated by the processes, and the like.

The bar-code reader 120A is a QR code reader that reads the QR code representing the admission number possessed by the user who visits the data center 10 and enters the server room 14. The bar-code reader 120A is an example of an input part. The user may input the admission number through numeric keypad GUIs displayed on the display 102. If the user selects a mode such as this, the user can input the admission number in a case where the user forgets to bring the QR code.

The camera 120B is an example of a personal authentication part that obtains an image of a facial photograph of an identification (ID) card, such as an employee ID card or driver's license, that the user uses for a personal identification when entering the server room 14. The image of the ID card obtained by the camera 120B is displayed on a display of the management terminal 201, and the personal identification is established in a case where the following two conditions are met.

A first condition is that the face of the user, that an operator using the management terminal 201 checks through a window or the like, corresponds to the facial photograph of the identification card displayed on the display of the management terminal 201.

A second condition is that the personal information that is read from the web entry system and displayed on the display of the management terminal 201 corresponds to the personal information described in the identification card that is displayed on the display of the management terminal 201 as the obtained image obtained by the camera 120B.

The operator who uses the management terminal 201 transmits establishment data representing the establishment of the personal identification to the controller 110 when the personal identification is established.

The reader 120C is an example of a first reader that reads the biometric information of the user upon a first visit of the user to the data center 10. The reader 120C reads an image representing a venous pattern in the user's right middle finger, for example. The image representing the venous pattern read by the reader 120C is registered in the biometric database of the memory 216 of the reception server 200 by the registration processing part 112. The image representing the venous pattern is also read when reissuing the serial number of the admission card. This is because registration to the memory 216 is required.

At the first visit of the user to the data center 10, the card issuing device 130 issues the admission card storing a serial number when the biometric information is registered in the biometric database by the registration processing part 112 after the personal identification is established. The admission card is an IC card including an IC chip.

The same serial number is registered in the admission card that is issued at the time of the second and subsequent visits, unless the user wishes to reissue a serial number. The serial number is associated with the admission number in the database of the web entry system. The admission number is an example of reception information, and the serial number is an example of authorization information.

The card issuing device 130 issues an admission card upon receipt of the establishment data from the authenticator 113 at the time of the user's second or subsequent visit to the data center 10.

The management terminal 201 is a PC operated by the operator who performs personal identification as described above. The management terminal 201 is arranged in a room (not illustrated in FIG. 1) adjacent to the reception room 11. The adjacent room is placed at a position where the operator can see the face of the user who operates the reception terminal 100 located in the reception room 11 through a window.

The display of the management terminal 201 displays the image of the identification card obtained by the camera 120B and the user's personal information that is read from the web entry system. The operator determines whether the facial photograph of the identification card displayed on the display of the administration terminal 201 corresponds to the face of the user that appears through the window. The operator also determines whether the user's personal information, that is read from the web entry system and displayed on the display of the management terminal 201, corresponds to the personal information described in the identification card that is displayed on the display of the management terminal 201 as the obtained image of the camera 120B.

When the personal identification is established, the operator transmits the establishment data representing the establishment to the controller 110.

The management terminal 202 is provided in a reception room other than the reception room 11 and is a PC used by the operator who registers a user who performs entry procedures without using the reception terminal 100. The registration terminal 203 is a terminal for registering biometric information of the user who performs the entry procedure by using the management terminal 202. The registration terminal 203 includes a reader for reading the biometric information.

The key management server 300 manages a key of the cover of the key locker 301 that stores the key of the rack 15 located in the server room 14. The key locker 301, the card reader 302, and the reader 303 are connected to the key management server 300.

The key management server 300 reads the rack number, included in the visit information, from the web entry system based on the serial number registered in the admission card read by the card reader 302. The key management server 300 verifies whether the read rack number corresponds to an input rack number. In the database of the web entry system, the admission number and the serial number are associated with each other. Therefore, it is possible to read data associated with the admission number based on the serial number.

The key management server 300 reads the biometric information registered in the biometric database of the memory 216 based on the serial number registered in the admission card read by the card reader 302. The key management server 300 verifies whether the read biometric information corresponds to the biometric information read by the reader 303. Since the admission number and the serial number are associated with each other, it is possible to read the biometric information associated with the admission number in the biometric database based on the serial number.

The key management server 300 unlocks the cover of a box containing the key having the rack number included in the visit information in the key locker 301, if the biometric information read from the biometric information database corresponds to the biometric information read by the reader 303. This allows the user to remove the key from the key locker 301 and to unlock the cover of the rack having the rack number.

The key management server 300 does not unlock the cover of the box in the key locker 301 in a case where the verification of the biometric information is not established, and in a case where the verification of the rack number is not established.

The authentication management server 400 is connected to the gate management server 410 by a LAN or the like. The gate management server 410 is connected to the gate controller 421A, the card reader 422A, the reader 423A, the gate controller 421B, the card reader 422B, the reader 423B, the gate controller 421C, the card reader 422C, and the reader 423C via the internet 1.

The gate management server 410 holds data representing that the user passes through the corridor 12 and the front chamber 13 when entering the server room 14 from the reception room 11 at the data center 10. This data also includes data representing that no passages other than the corridor 12 and the front chamber 13 are required to the enter server room 14 from the reception room 11. This data can be used to authenticate whether to unlock the gates 11A, 12A, and 13A.

The gate management server 410 obtains the serial number, registered in the admission card read by the card reader 422A, and the biometric information, read by the reader 423A, from the gate controller 421A.

The gate management server 410 accesses the reception server 200 via the internet 1, and reads the name of the data center, included in the visit information, from the web entry system based on the obtained serial number. The gate management server 410 verifies whether the read name of the data center corresponds to the data center 10, and verifies the biometric information, if the verification of the name of the data center is established. The correspondence of the read name of the data center and data center 10 means that the visit conditions represented by the visit information are satisfied, and that the verification based on the visit conditions is established.

The gate management server 410 reads the biometric information registered in the biometric database based on the obtained serial number, and verifies whether the read biometric information corresponds to the biometric information obtained from the gate controller 421A.

The gate management server 410 transmits an unlocking command that permits unlocking of the gate 11A to the gate controller 421A, if the verification of the biometric information is established. The gate controller 421A unlocks the gate 11A upon receiving the unlocking command.

The gate management server 410 does not transmit the unlocking command to the gate controller 421A, in a case where the verification of the biometric information is not established, and in a case where the verification of the read name of the data center and the data center 10 is not established. As a result, gate 11A is not unlocked.

Similarly, the gate management server 410 obtains the serial number registered in the admission card that is read by the card reader 422B and the biometric information read by the reader 423B from the gate controller 421B.

The gate management server 410 accesses the reception server 200 via the internet 1. The gate management server 410 reads a server room number included in the visit information from the web entry system based on the obtained serial number. The gate management server 410 verifies whether the server room 14 indicated by the read server room number is located inside the gate 12A, and performs the verification of the biometric information in a case where the verification of the read number is established.

An existence of the server room 14, indicated by the server room number included in the visit information, inside the gate 12A means that the visit conditions represented by the visit information are satisfied, and the verification based on the visit conditions is established.

The gate management server 410 reads the biometric information registered in the biometric database based on the obtained serial number, and verifies whether the read biometric information corresponds to the biometric information obtained from the gate controller 421B.

The gate management server 410 transmits an unlocking command that permits unlocking of the gate 12A to the gate controller 421B, if the verification based on the biometric information is established. The gate controller 421B unlocks the gate 12A upon receiving the unlocking command.

The gate management server 410 does not transmit the unlocking command to the gate controller 421B, in a case where the verification of the biometric information is not established, and in a case where the verification of the read server room number is not established. As a result, gate 12A is not unlocked.

The gate management server 410 obtains the serial number, registered in the admission card read by the card reader 422C, and the biometric information, read by the reader 423C, from the gate controller 421C.

The gate management server 410 accesses the reception server 200 via the internet 1. The gate management server 410 reads the server room number included in the visit information from the web entry system based on the obtained serial number. The gate management server 410 verifies whether the server room 14 indicated by the read server room number is located inside the gate 13A, and verifies the biometric information in a case where the verification of the server room number is established.

An existence of the server room 14, indicated by the server room number included in the visit information, inside the gate 13A means that the visit conditions represented by the visit information are satisfied, and the verification based on the visit conditions is established.

The gate management server 410 reads the biometric information registered in the biometric database based on the obtained serial number, and verifies whether the read biometric information corresponds to the biometric information obtained from the gate controller 421C.

The gate management server 410 transmits an unlocking command that permits unlocking of the gate 13A to the gate controller 421C, if the verification based on the biometric verification is established. The gate controller 421C unlocks the gate 13A upon receiving the unlocking command. This allows the user to enter the server room 14.

The gate management server 410 does not transmit the unlocking command to the gate controller 421C in a case where the verification of the biometric information is not established, and in a case where the verification of the read server room number is not established. As a result, gate 13A is not unlocked.

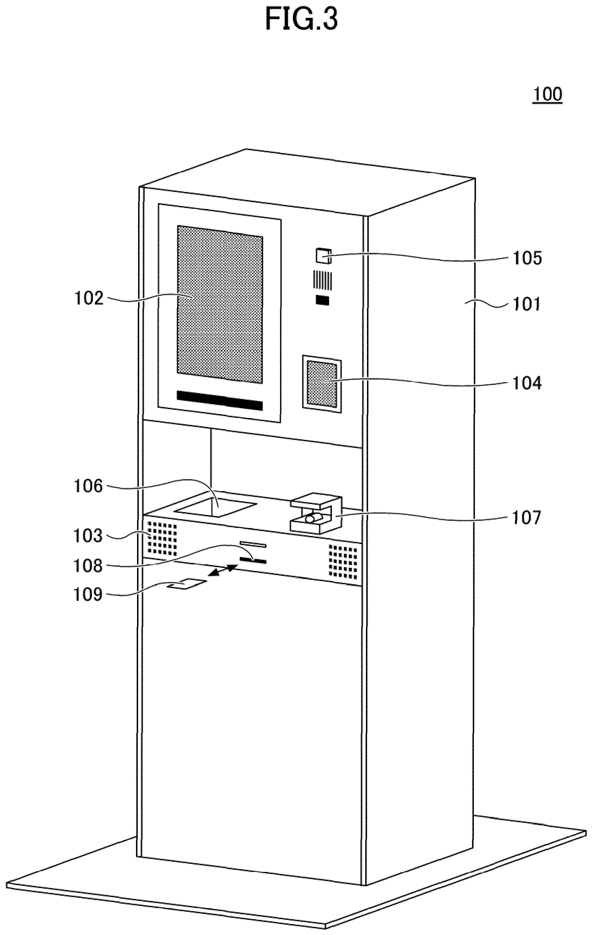

FIG. 3 illustrates an external view of the reception terminal 100. The reception terminal 100 includes a housing 101, the display 102, a speaker 103, a QR code reader 104, an interphone 105, a personal authenticator 106, a biometric reader 107, and a card inlet/outlet 108.

The housing 101 is a rectangular parallelepiped housing in which the display 102 is disposed on a top portion of a front surface. The housing 101 includes the controller 110, the bar-code reader 120A, the camera 120B, the reader 120C, and the card issuing device 130 (see FIG. 2).

The display 102 includes a touch panel and utilizes graphic user interface (GUI) images so as to function as an input part. The speaker 103 outputs audio guides or the like. The QR code reader 104 is positioned next to the display 102 and is utilized by the user to read the QR code that represents the admission number. The QR code reader 104 is the bar-code reader 120A shown in FIG. 2.

The interphone 105 is located above the QR code reader 104 and is provided for the user to communicate with the operator in the next room when performing a personal authentication using the identification card.

The personal authenticator 106 has a camera therein, and when the identification card is placed downward, the camera reads the identification card and displays an image of the identification card on the display of the management terminal 201. The personal authenticator 106 is the camera 120B as illustrated in FIG. 2.

The biometric reader 107 is a reader that obtains data of the venous pattern of a fingertip as the biometric information. The biometric reader 107 is the reader 120C as illustrated in FIG. 2. The biometric reader 107 reads the biometric information at the first visit and at a re-registration of the serial number.

The card inlet/outlet 108 outputs an admission card 109 when issuing the admission card 109, and the admission card 109 is inserted into the card inlet/outlet 108 when the user returns the admission card 109. The card inlet/outlet 108 is a part of the card issuing device 130.

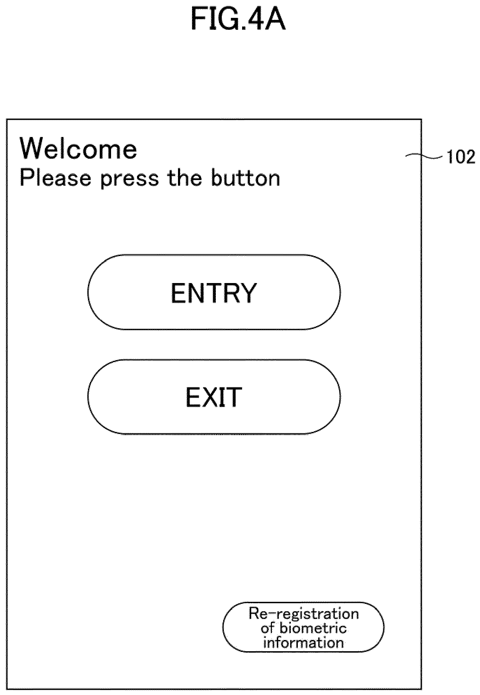

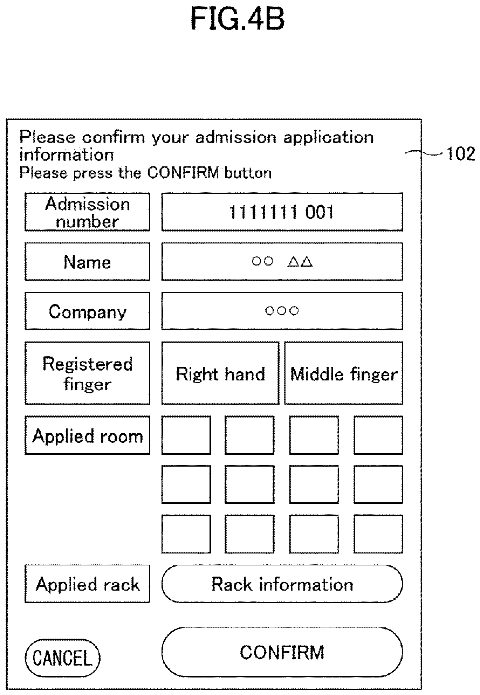

FIGS. 4A and 4B are diagrams illustrating examples of display contents of the display 102 of the reception terminal 100. The display contents of the display 102 are controlled by the main controller 111.

FIG. 4A illustrates the display contents when the user stands in front of the reception terminal 100. The reception terminal 100 has a built-in human sensor and displays a picture as illustrated in FIG. 4A when the user stands in front of the reception terminal 100. In FIG. 4A, the user can select the entry and the exit.

FIG. 4B illustrates a picture displaying the admission application information. In an admission application picture, various items registered as the admission application information are displayed. In the admission application picture, a GUI button for selecting rack information, a GUI button for selecting confirm, and a GUI button for selecting cancel are displayed.

The picture as illustrated in FIG. 4B is displayed as a confirmation picture after the QR code brought by the user is read and the verification based on the admission number is established, and before issuing the admission card, at the time of the user's second or subsequent visit to the data center 10.

Various other pictures are displayed on the display 102. For example, a picture confirming that no dangerous goods have been brought into the data center 10, a picture requesting the user to place the QR code on the QR code reader 104 to confirm the admission number, a picture indicating that a date of the entry is incorrect when the date of the entry does not coincide with the date and time included in the visit information, a picture indicating a message that requests the user to place the identification card on the personal authenticator 106 when the personal identification is performed, a picture selecting the finger for registering the biometric information, a picture prompting an acceptance of the admission card and a use of a neck strap when the admission card is issued, and the like are displayed.

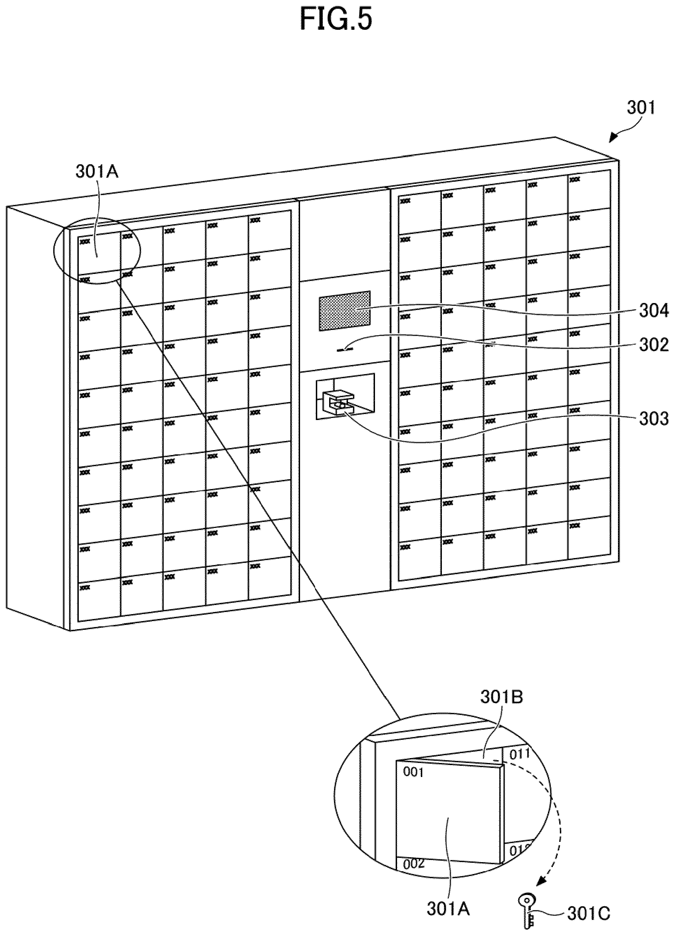

FIG. 5 is a diagram illustrating the key locker 301 that stores the rack keys. The key locker 301 is located inside the server room 14.

The key locker 301 has covers 301A attached to a plurality of boxes 301B, arranged in a matrix, respectively. The rack number is described on each cover 301A, and each box 301B contains a key 301C corresponding to the rack number.

The card reader 302, the reader 303, and a display 304 are provided on a front surface of the key locker 301. The reader 303 is an example of a third reader. The display 304 has a touch panel and the user can input the rack number to the display 304.

The user inputs the rack number to the display 304, and inserts the admission card into the card reader 302. If the verification of the serial number is established, the user inserts the fingertip into the reader 303. Then the verification of the biometric information is performed. If the both verifications are established, the cover 301A corresponding to the input rack number is unlocked. Then the user can pick up the key 301C. Since a message requesting an insertion of the admission card and a message requesting a read of the biometric information are displayed on the display 304, the user may operate the key locker 301 in accordance with the messages.

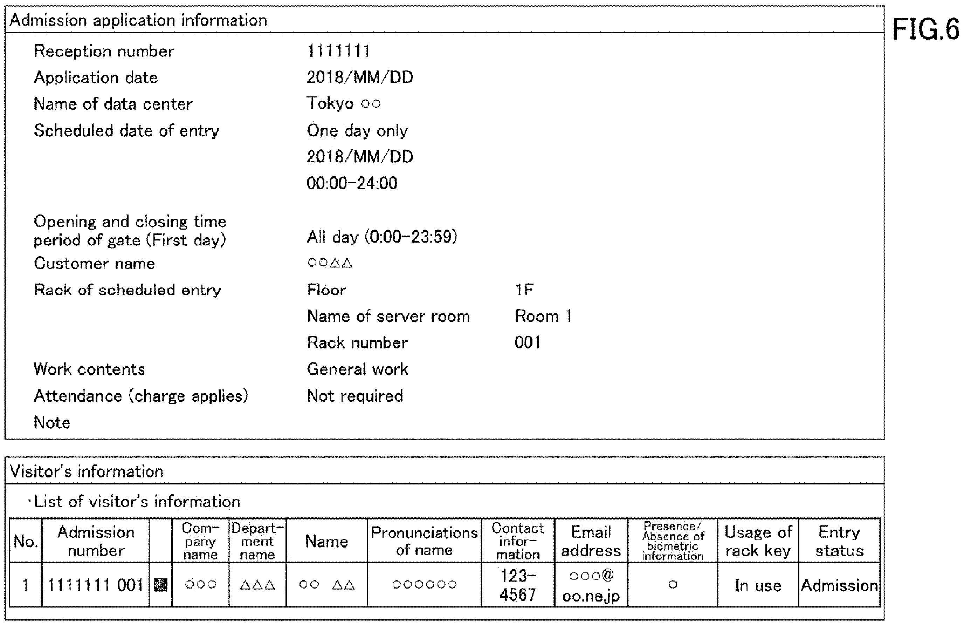

FIG. 6 is a diagram illustrating an example of a confirmation picture of input contents to the web entry system. The user accesses the reception server 200 via the internet 1 from the PC at the user's workplace or the like, and inputs the personal information (name, pronunciations of the name, workplace (name of company), contact information (phone number and email address), the visit information (name of the data center, date and time, server room number, and rack number to visit), and other necessary information to the web entry system.

For example, in the confirmation picture as illustrated in FIG. 6, the reception number (1111111), an application date (2018/MM/DD), the name of the data center (Tokyo oo), a scheduled date of entry (one day only, 2018/MM/DD, 00:00-23:59), an opening and closing time period of the gate (all day (0:00-23:59)), a customer name (○○ΔΔ), a floor of rack of scheduled entry (IF), name of the server room (room 1), the rack number (001), work contents (general work) and attendance (not required) are input as the admission application information.

In addition, as illustrated in a lower part of FIG. 6, the admission number (1111111), the QR code, the company name (○○○), a department name (ΔΔΔ), the name (○○ΔΔ ), the pronunciations of the name (oooooo), the contact information (123-4567), the email address (○○○@○○.ne.jp), a presence or an absence of the biometric information (o), a usage of the rack key, an entry status, and the like are displayed as a visitor's information.

The reception number is the same as the admission number. The presence or the absence of the biometric information indicates whether the biometric information is registered or not, and the o indicates that the biometric information is registered.

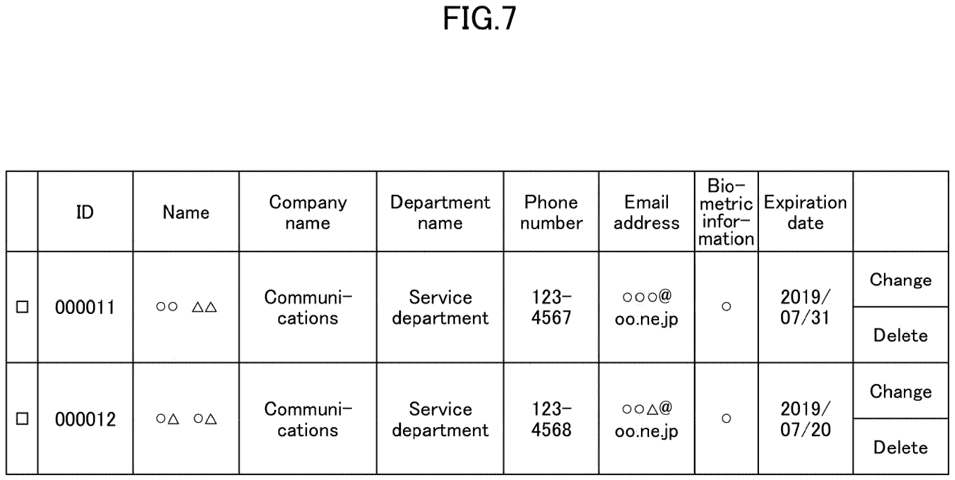

FIG. 7 is a diagram illustrating registration contents of the visitor-note. The visitor-note includes an ID, the name, the company name, the department name, the email address, the biometric information (presence/absence), and an expiration date. The ID is allocated to the user when the user pre-registers the personal information and the visit information to the web entry system. The ID is associated with the admission number.

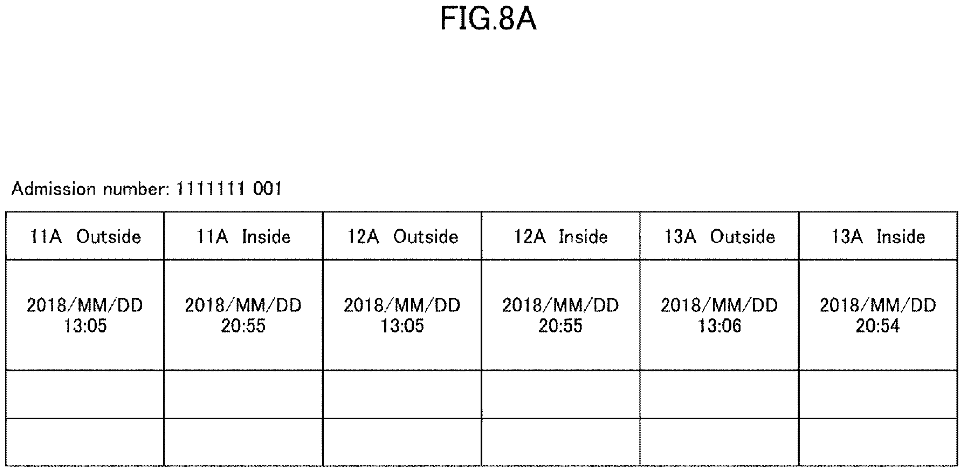

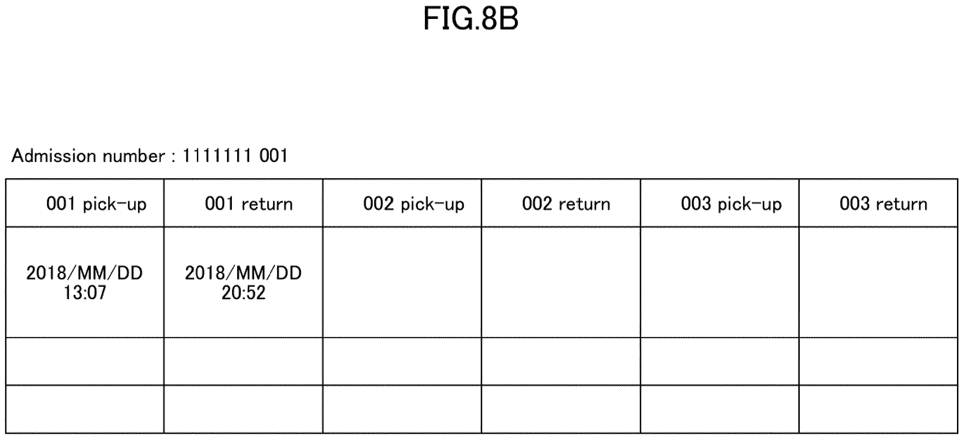

FIGS. 8A and 8B are diagrams illustrating an entry/exit record and a rack open/close record, respectively. FIG. 8A illustrates the entry/exit record generated by the entry/exit record generator 214. The entry/exit record records the date and time when the user performed the authentication and opened and closed the gates 11A, 12A, and 13A from outside or inside. The date and time when the user opened and closed the gates 11A, 12A, and 13A from outside is an entry record of the user into the server room 14. The date and time when the user opened and closed the gates 11A, 12A, and 13A from inside is an exit record of the user from the server room 14.

FIG. 8B illustrates the rack opening/closing record generated by the rack opening/closing record generator 215. The rack opening/closing record records the date and time when the user performed the authentication so as to pick up the key 301C and opened and closed the cover 301A of the key locker 301, and the date and time when the user performed the authentication so as to return the key 301C and opened and closed the cover 301A of the key locker 301, for each rack number. A 001 pick-up represents that the user picked up the key of which the rack number is 001. A 001 return represents that the user returned the key of which the rack number is 001. The same applies to the keys of which the rack numbers are 002 and 003.

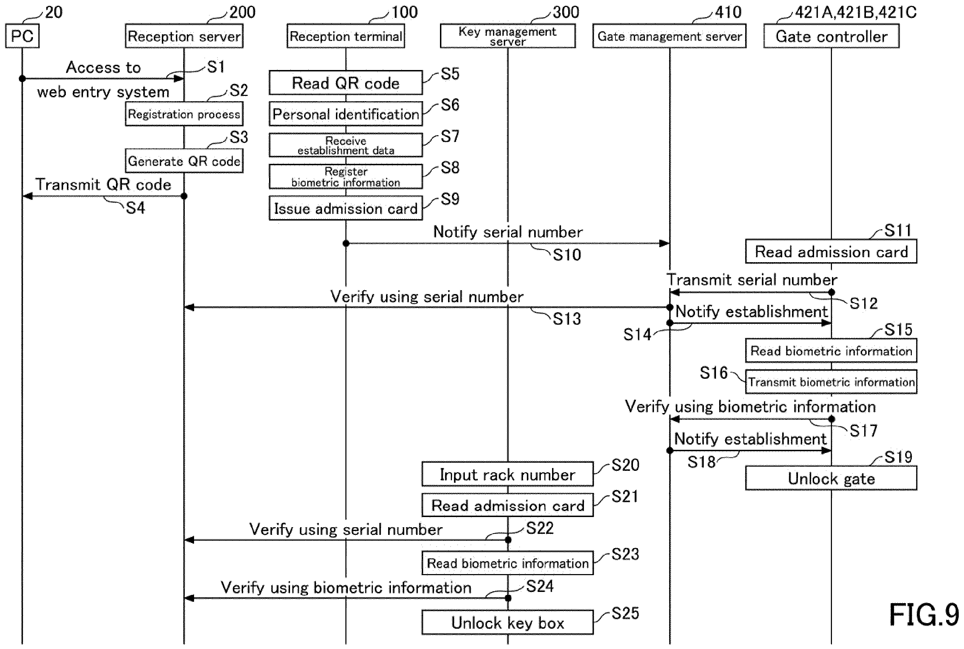

FIGS. 9 to 11 are task transition diagrams illustrating processes performed in the management system 500. FIG. 9 illustrates the processes performed from the pre-registration, to the web entry system, to the unlock of the rack key at the first visit of the user to the data center 10.

The user accesses the web entry system of the reception server 200 from a PC 20 at the workplace (step S1) .

When the web entry system processing part 212 of the reception server 200 accepts inputs of the personal information and the visit information to the web entry system, the web entry system processing part 212 registers the personal information and the visit information in the database of the web entry system and issues an admission number (step S2).

When the web entry system processing part 212 completes the registration process, the web entry system processing part 212 generates the QR code representing the admission number (step S3).

The web entry system processing part 212 transmits the generated QR code to the email address of the user's PC 20 (step S4).

When the user brings the QR code and starts the operation of the reception terminal 100, the bar-code reader 120A of the reception terminal 100 reads the QR code, and the authenticator 113 reads the personal information and the visit information associated with the admission number represented by the QR code in the web entry system (Step S5).

The main controller 111 displays the messages on the display 102 requesting the user to place the identification card on the personal authenticator 106 in order to perform personal identification, causes the camera 120B to capture the identification card, and transmits the image obtained by the camera 120B, and the personal information and the visit information read by the authenticator 113 to the management terminal 201 (step S6). As a result, the display of the management terminal 201 displays the image of the identification card, the personal information, and the visit information. The operator of the management terminal 201 performs the personal identification while viewing the user through the window.

The main controller 111 receives the establishment data from the management terminal 201 (step S7). If the operator determines that the personal identification is established, and presses a confirmation key of the management terminal 201, the establishment data is transmitted to the reception terminal 100.

The registration processing part 112 registers the biometric information (step S8). Specifically, the registration processing part 112 displays the messages requesting the user to determine the finger for registering the biometric information on the display 102. The registration processing part 112 displays the messages requesting the user to insert the finger into the biometric reader 107 on the display 102, when the user determines the finger. When the biometric information is obtained by the biometric reader 107, the registration processing part 112 registers the obtained biometric information in the biometric database of the memory 216.

When the biometric information is registered by the registration processing part 112, the main controller 111 causes the card issuing device 130 to issue the admission card storing the serial number (step S9).

The main controller 111 notifies the gate management server 410 of the serial number (step S10).

The gate controller 421A obtains the serial number when the card reader 422A reads the admission card (step S11) .

The gate controller 421A transmits the serial number to the gate management server 410 (step S12).

The gate management server 410 performs the verification using the serial number (step S13). More specifically, the gate management server 410 reads the name of the data center included in the visit information from the web entry system based on the obtained serial number, and verifies whether the read name of the data center corresponds to the data center 10.

The gate management server 410 notifies the gate controller 421A that the verification using the serial number is established (step S14).

The gate controller 421A obtains the biometric information when the reader 423A reads the biometric information (step S15).

The gate controller 421A transmits the biometric information to the gate management server 410 (step S16).

The gate management server 410 performs the verification using the biometric information (step S17). More specifically, the gate management server 410 reads the biometric information from the biometric database based on the admission number associated with the transmitted serial number, and verifies whether the read biometric information corresponds to the biometric information obtained from the gate controller 421A.

The gate management server 410 notifies the gate controller 421A that the verification using the biometric information is established (step S18).

The gate controller 421A unlocks the gate 11A (step S19).

The gate management server 410 performs, with the gate controller 421B, the same processing as in steps S11 to S19 with respect to the gate 12A. As a result, the gate controller 421B unlocks the gate 12A. The gate management server 410 performs, with the gate controller 421C, the same processing as in steps S11 to S19 with respect to the gate 13A. As a result, the gate controller 421C unlocks gate 13A.

The key management server 300 accepts the rack number input to the display 304 (step S20).

The key management server 300 obtains the serial number when the card reader 302 reads the admission card (step S21).

The key management server 300 performs the verification using the serial number (step S22). More specifically, the key management server 300 reads the rack number included in the visit information from the web entry system based on the obtained serial number and verifies whether the read rack number corresponds to the rack number input to the display 304.

The key management server 300 obtains the biometric information read by the reader 303 when the verification using the serial number is established (step S23).

The key management server 300 performs verification using the biometric information (step S24). More specifically, the key management server 300 reads the biometric information from the biometric database based on the admission number associated with the obtained serial number and verifies whether the read biometric information corresponds to the biometric information obtained from the reader 303.

When the verification using the biometric information is established, the key management server 300 unlocks the key locker 301 (step S25).

According to the above processes, the processes performed from the pre-registration, to the web entry system, to the unlock of the rack key at the first visit of the user to the data center 10 are completed.

The entry/exit record generator 214 records the date and time when the user performed the authentication and opened and closed the gates 11A, 12A, and 13A from outside or inside, and thereby generates the entry/exit record including the entry record and the exit record of the user. However, the processes performed by the entry/exit record generator 214 are omitted in FIG. 9.

The rack opening/closing record generator 215 records the date and time when the user performed the authentication so as to pick up the key 301C and opened and closed the cover 301A of the key locker 301, and the date and time when the user performed the authentication so as to return the key 301C and opened and closed the cover 301A of the key locker 301, for each rack number, and thereby generates the rack opening/closing record. However, the processes performed by the rack opening/closing record generator 215 are omitted in FIG. 9.

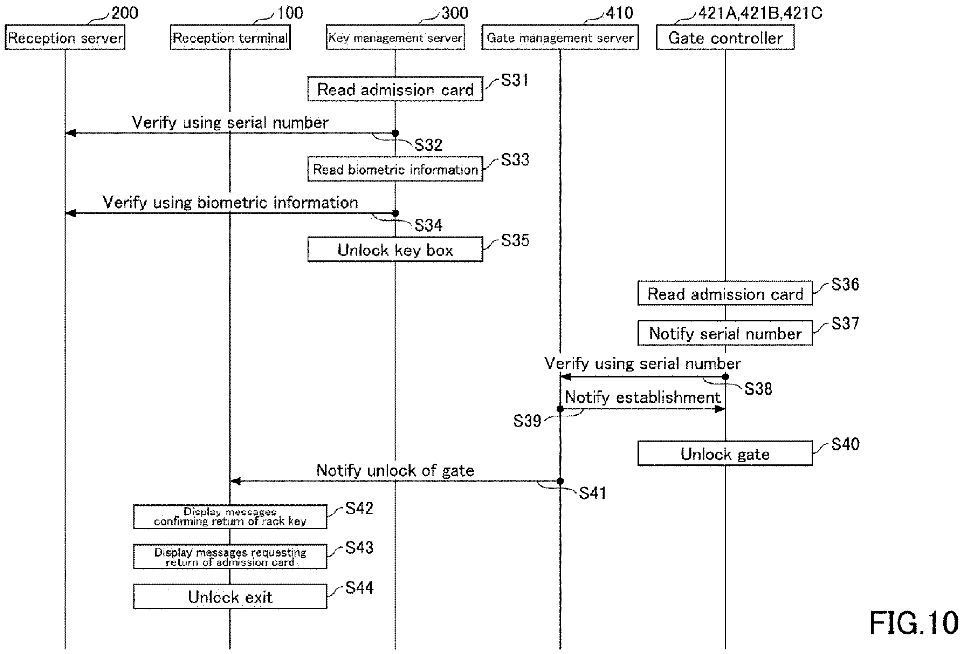

FIG. 10 illustrates the processes performed from the return of the rack key to the exit of the user from the data center 10.

When the card reader 302 reads the admission card, the key management server 300 obtains the serial number (step S31) .

The key management server 300 performs the verification using the serial number (step S32). More specifically, the key management server 300 reads the rack number included in the visit information from the web entry system based on the obtained serial number, and verifies whether the read rack number corresponds to the input rack number.

When the verification using the serial number is established, the key management server 300 obtains the biometric information read by the reader 303 (step S33).

The key management server 300 performs the verification using the biometric information (step S34). More specifically, the key management server 300 reads the biometric information from the biometric database based on the admission number associated with the obtained serial number, and verifies whether the read biometric information corresponds to the biometric information obtained from the reader 303.

When the verification using the biometric information is established, the key management server 300 unlocks the key locker 301 (step S35). The user can return the rack key in the key locker. Then, the user exits from the server room 14.

When the card reader 422C reads the admission card, the gate controller 421C obtains the serial number (step S36).

The gate controller 421C transmits the serial number to the gate management server 410 (step S37).

The gate management server 410 performs verification using the serial number (step S38). More specifically, the gate management server 410 reads the room number of the server room 14 included in the visit information from the web entry system based on the obtained serial number, and verifies whether the read room number of the server room 14 corresponds to the room number of the server room 14.

The gate management server 410 notifies the gate controller 421C that the verification using the serial number is established (step S39)

The gate controller 421C unlocks the gate 13A (step S40).

The gate management server 410 performs the same processes as the processes of steps S36 to S40 with the gate controller 421B, with respect to the gate 12A. As a result, the gate controller 421B unlocks gate 12A. The gate management server 410 performs the same processes as the processes of steps S36 to S40 with the gate controller 421A, with respect to the gate 11A. As a result, the gate controller 421A unlocks the gate 11A.

The gate management server 410 notifies the reception terminal 100 that the gate 11A is unlocked (step S41) .

The rack-key-return request part 114 of the reception terminal 100 displays the messages, requesting the user to return the rack key, on the display 102 (step S42).

The card-return request part 115 of the reception terminal 100 displays the messages, requesting the user to return the admission card, on the display 102 (step S43). The exit of the reception room 11 is not unlocked, unless the admission card is returned.

When the admission card is inserted into the card inlet/outlet 108, the unlock management part 116 of the reception terminal 100 unlocks the exit of the reception room 11 (step S44).

According to the above processes, the processes performed from the return of the rack key to the exit of the user from the data center 10 are completed. The entry/exit record generator 214 records the date and time when the user performed the authentication and opened and closed the gates 11A, 12A, and 13A from outside or inside, and thereby generates the entry/exit record including the entry record and the exit record of the user. However, the processes performed by the entry/exit record generator 214 are omitted in FIG. 10.

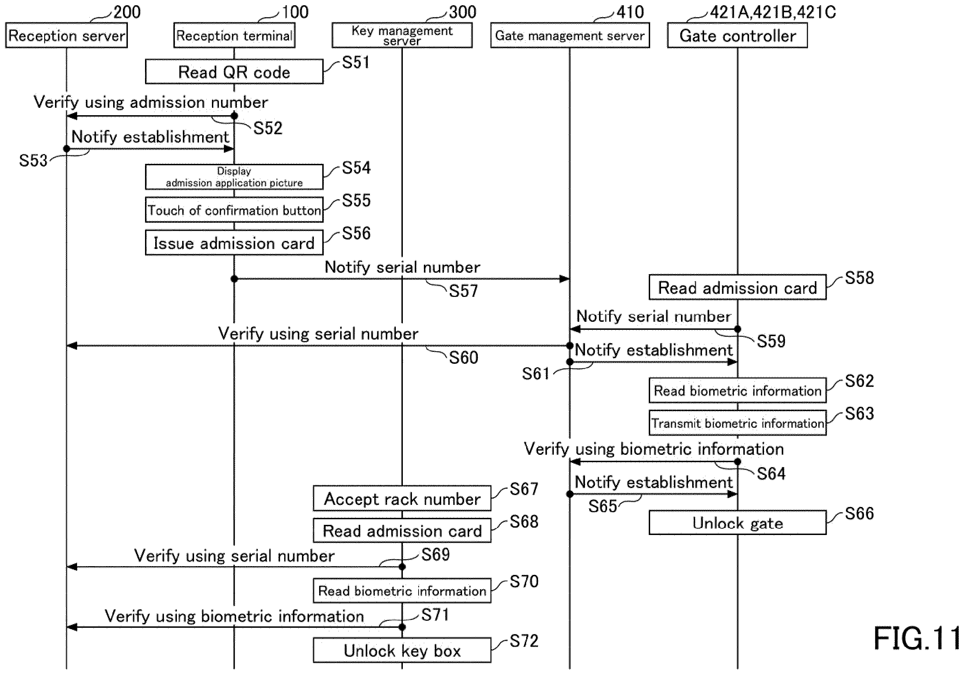

FIG. 11 illustrates processes performed from the entry of the user into the data center 10 to the unlock of the rack key at the time of the user's second or subsequent visit to the data center 10. Herein, the user has already performed the admission application to the web entry system, and the user visits the data center 10 on a date and time registered as the scheduled date of entry.

When the user brings the QR code and operates the reception terminal 100, the bar-code reader 120A of the reception terminal 100 reads the QR code and obtains the admission number (step S51).

The authenticator 113 of the reception terminal 100 performs the verification using the admission number (step S52). More specifically, the reception terminal 100 reads the name of the data center and the date and time included in the visit information from the web entry system based on the obtained admission number. The reception terminal 100 verifies whether the read name of the data center corresponds to the data center 10, and whether the current time is included in a period of time representing the read date and time.

In a case where the verification is established, the authenticator 113 notifies the main controller 111 that the verification is established (step S53).

The main controller 111 displays the admission application picture on the display 102 upon receiving the notification from the authenticator 113 (step S54). In the admission application picture, the admission application information (see Figure 4B) is displayed. In the admission application picture, the confirmation button realized by a GUI is displayed.

When the confirmation button is touched, the main controller 111 transmits the establishment data to the card issuing device 130 (step S55).

The card issuing device 130 issues the admission card upon receiving the establishment data from the authenticator 113 (step S56). In such a way, the smart entry is realized.

The main controller 111 notifies the serial number to the gate management server 410 (step S57).

When the card reader 422A reads the admission card, the gate controller 421A obtains the serial number (step S58).

The gate controller 421A transmits the serial number to the gate management server 410 (step S59).

The gate management server 410 performs the verification using the serial number (step S60). More specifically, the gate management server 410 reads the name of the data center included in the visit information from the web entry system based on the obtained serial number, and verifies whether the read name of the data center corresponds to the data center 10.

The gate management server 410 notifies the gate controller 421A that the verification using the serial number is established (step S61).

When the reader 423A reads the biometric information, the gate controller 421A obtains the biometric information (step S62).

The gate controller 421A transmits the biometric information to the gate management server 410 (step S63).

The gate management server 410 performs the verification using the biometric information (step S64). More specifically, the gate management server 410 reads the biometric information from the biometric database based on the admission number associated with the obtained serial number, and verifies whether the read biometric information corresponds to the biometric information transmitted from the gate controller 421A.

The gate management server 410 notifies the gate controller 421A that the verification using the biometric information is established (step S65).

The gate controller 421A unlocks the gate 11A (step S66).

The gate management server 410 performs the same processes as the processes in steps S58 to S66 with the gate controller 421B, with respect to the gate 12A. As a result, the gate controller 421B unlocks the gate 12A. The gate management server 410 performs the same processes as the processes in steps S58 to S66 with the gate controller 421C, with respect to the gate 13A. As a result, the gate controller 421C unlocks the gate 13A.

The key management server 300 accepts the rack number input to the display 304 (step S67).

When the card reader 302 reads the admission card, the key management server 300 obtains the serial number (step S68).

The key management server 300 performs the verification using the serial number (step S69). More specifically, the key management server 300 reads the rack number included in the visit information from the web entry system based on the obtained serial number, and verifies whether the read rack number corresponds to the input rack number.

The key management server 300 obtains the biometric information read by the reader 303 when the verification using the serial number is established (step S70).

The key management server 300 performs the verification using the biometric information (step S71). More specifically, the key management server 300 reads the biometric information from the biometric database based on the admission number associated with the obtained serial number, and verifies whether the read biometric information corresponds to the biometric information obtained from the reader 303.

The key management server 300 unlocks the key locker 301 when the verification using the biometric information is established (step S72).

According to the above processes, the processes performed from the entry of the user into the data center 10 to the unlocking of the rack key at the time of the user's second or subsequent visit to the data center 10 are completed.

The entry/exit record generator 214 records the date and time when the user performed the authentication and opened and closed the gates 11A, 12A, and 13A from outside or inside, and thereby generates the entry/exit record including the entry record and the exit record of the user. However, the processes performed by the entry/exit record generator 214 are omitted in FIG. 11.

The rack opening/closing record generator 215 records the date and time when the user performed the authentication so as to pick up the key 301C and opened and closed the cover 301A of the key locker 301, and the date and time when the user performed the authentication so as to return the key 301C and opened and closed the cover 301A of the key locker 301, for each rack number, and thereby generates the rack opening/closing record. However, the processes performed by the rack opening/closing record generator 215 are omitted in FIG. 11.

As discussed above, the management system 500 employs the verifications using the venous pattern of the fingertip as the biometric information for the entry into the security zone for the user. Since the venous patterns of the fingertips differ from one another, the management system 500 is robust to a fraudulent such as an impersonation, and is suitable for enhancing security.

Accordingly, it is possible to provide the management system 500 and data center 10 that provide an enhanced security level.

The data center 10 is a facility that rents hundreds to thousands or more of racks 15 to various clients, and holds servers that handle the client's confidential information. Therefore, considerably high security level is required for the data center 10.

On the other hand, when the user visits the data center 10 and enters the server room 14, a completion of the entry procedures with simplified procedures in as little time as possible is required. If it takes time to complete the entry procedure, many users have to wait in a queue. This may lead to a reduction in efficiency of the user's work.

Accordingly, the data center 10 is confronted with contradictory requirements of considerably high security and the simplified entry procedure.

The user who registers the personal information and the visit information to the web entry system before visiting the data center 10 employing the management system 500 can obtain the admission card only by having the reception terminal 100 read the QR code in the reception room 11.

After obtaining the admission card, the user can unlock the gates 11A, 12A, and 13A only by performing the verifications using the biometric information and the verifications using the serial number stored in the admission card, and can enter the server room 14. Accordingly, it is possible to achieve the considerably high security and the simplified entry procedure, when the user enters the server room 14.

Further, in the server room 14, the key locker 301 is unlocked only by performing the verification using the biometric information and the verification using the serial number stored in the admission card. Therefore, it is possible to achieve the considerably high security and the simplified entry procedures when the user picks up the rack key.

Accordingly, it is possible to provide the management system 500 and the data center 10 that can achieve contradictory requirements of the considerably high security and the simplified entry procedure.

Although the embodiment in which the venous patterns of the fingertips are used as the biometric information is described above, a palm shape authentication, a palm vein authentication, a fingerprint authentication, an iris authentication, a retinal authentication, a face authentication, and the like may be used.

In the embodiment as described above, the admission card 109 stores information representing the serial number, a bar-code representing the serial number may be registered in a smartphone or the like instead of the admission card, and the bar-code may be read by the readers 423A to 423C located in front of the gates 11A to 13A.

In the embodiment as described above, the unlock management part 116 unlocks the door at the exit of the reception room 11 when the card-return request part 115 confirms that the admission card is returned. The management system 500 may not include such a function performed by the unlock management part 116 and the card-return request part 115.

In the embodiment as described above, the personal identification is performed visually by the operator of the management terminal 201. However, for example, in a case where a computer equipped with artificial intelligence (AI) can perform the personal identification, the computer may perform the personal identification instead of the operator.

In the embodiment as described above, the rack 15 is unlocked by the key 301C contained in the key locker 301. The management system 500 may include a rack key management part, provided at the rack 15, that manages a key of an electronic lock, and may not include the key locker 301. The user may input key information stored in the admission card to the rack key management part instead of using the key 301C, and the rack key management part may unlock the rack 15 in a case where the verification using the biometric authentication is established.

A data center, that is different from the data center 10 and is similar to the data center 10, may be provided with devices that are the same as the reception terminal 100, the key locker 301, the card reader 302, the reader 303, the gate controller 421A, the card reader 422A, the reader 423A, the gate controller 421B, the card reader 422B, the reader 423B, the gate controller 421C, the card reader 422C, and the reader 423C. In this case, the user may be able to enter the data center in a manner similar to the user's second or subsequent visit to the data center 10.

Alternatively, an IC chip or an RFID tag may be embedded in the rack key, in order to suppress the user's missing of return of the rack key when the user exits the server room 14.

In addition, a camera installed in the reception terminal 100 may be used to inspect luggage (s) of the visiting user.

In the embodiment as described above, in a condition where the user's biometric information is registered in the biometric database, the card issuing device 130 issues the admission card when the user visits the data center 10, in a case where the following conditions are satisfied. The following conditions are that the reception terminal 100 reads the QR code, that the personal information associated with the admission number represented by the QR code exists in the web entry system, that the name of the data center to be visited included in the visit information corresponds to the data center 10, and that the date and time included in the visit information includes the time of the user's visit.

However, in a case where the admission number represented by the QR code is stored in the database of the web entry system, the card issuing device 130 may issue the admission card.

In the embodiment as described above, the reception server 200 is disposed at the data center 10. However, the reception server 200 may be disposed at a location other than the data center 10 and may be connected to the reception terminal 100 and the key management server 300 via the internet 1.

In the embodiment as described above, the authentication management server 400 is disposed at a location apart from the data center 10. However, the authentication management server 400 may be disposed at the data center 10. In this case, the reception terminal 100, the reception server 200, the key management server 300, and the authentication management server 400 may be connected by the LAN or the like of the data center 10.

Although the management system and data center of the exemplary embodiments of the present invention are described, the present invention is not limited to the specifically disclosed embodiments. It should be understood that various changes and modifications could be made hereto without departing from the sprit and scope of the claims.

The present patent application claims priority based on Japanese patent application No. 2018-156492, filed in the JPO on August 23, 2018, and the entire contents of which are hereby incorporated by reference in their entirety.

### DESCRIPTION OF REFERENCE SIGNS

- 10: data center
- 11: reception room
- 14: server room
- 15: rack
- 11A: to 13A gate
- 100: reception terminal
- 110: controller
- 120A: bar-code reader
- 120B: camera
- 120C: reader
- 130: card issuing device
- 200: reception server
- 300: key management server
- 301: key locker
- 400: authentication management server
- 410: gate management server
- 500: management system

## Claims

1. A reception terminal included in a management system for managing entry and/or exit of a user in a security zone that includes a server room of a data center, the reception terminal being connected to a reception device that issues reception information upon accepting an input of personal information of the user prior to the entry of the user into the security zone, the reception terminal comprising:
an input part that accepts an input of the reception information performed by the user prior to the entry of the user into the security zone;
a personal authentication part that is used for a personal authentication of the user visiting the data center; and
an issuing part that issues, in a case where biometric information is pre-registered in addition to a performance of a personal identification, authorization information representing an authorization of the entry of the user into a particular server room in response to existence of personal information associated with the reception information input to the input part, in conjunction with a satisfaction of a visit condition of visit information associated with the reception information input to the input part.

2. The reception terminal as claimed in claim 1, wherein the issuing part issues the authorization information based on the pre-registered biometric information prior to the entry of the user into the security zone.

3. The reception terminal as claimed in claim 1 or 2, further comprising:
a reader that reads biometric information; and
a registration processing part that registers the biometric information read by the reader at a time of a first visit of the user to the data center or at a time of reissuance of the authorization information to the user;
wherein the issuing part issues the authorization information in response to the registration, in addition to a performance of the personal identification, of the biometric information performed by the registration processing part at the time of the first visit of the user to the data center or at the time of the reissuance of the authorization information to the user.

4. The reception terminal as claimed in claim 3, wherein the biometric information registered by the registration processing part is used for a biometric authentication performed upon the entry of the user into the security zone or the server room.

5. The reception terminal as claimed in any one of claims 1 to 4, further comprising:
a rack-key-return request processing part that performs a display requesting the user to confirm whether a key of a rack located in the server room is returned.

6. The reception terminal as claimed in any one of claims 1 to 5, further comprising:
an authorization-information-return request processing part that performs a display requesting the user to return the authorization information.

7. The reception terminal as claimed in claim 6,
wherein the reception terminal is connected to an unlock management part, via the network, that manages an unlock of an exit of the data center, and
wherein the authorization-information-return request processing part outputs an unlock command that causes the unlock management part to unlock the exit of the data center upon confirming the return of the authorization information.

8. The reception terminal as claimed in any one of claims 1 to 7,
wherein, in a case where the personal information associated with the reception information input to the input part by a bar-code input or a key input exists, the issuing part issues the authorization information in response to a recognition that the personal information of the user is accepted by the reception device, in conjunction with the satisfaction of the visit condition of the visit information associated with the reception information input to the input part by the bar-code input or the key input.
